# FASCICULE DE BREVET EUROPEEN

(11) **EP 4 086 321 B1**
(45) Date de publication et mention de la délivrance du brevet: **07.01.2026**
(21) Numéro de dépôt: 22169573.7
(22) Date de dépôt: 22.04.2022
(51) Int. Cl.: C09J 5/00, C09J 5/02, B29C 65/48, B29C 65/82, B29C 65/00, B29L 31/08, B29L 31/30

(54) **PROCÉDÉS DE COLLAGE ET D ANALYSE DE COLLAGE ENTRE DEUX PIÈCES AÉRONAUTIQUES**
VERFAHREN ZUM VERBINDEN VON ZWEI FLUGZEUGBAUTEILEN UND ZUR ANALYSE EINER VERBINDUNG ZWISCHEN ZWEI FLUGZEUGBAUTEILEN
METHODS OF BONDING TWO AERONAUTICAL PARTS AND OF ANALYSING A BONDING BETWEEN TWO AERONAUTICAL PARTS

(30) Priorité: 04.05.2021 US 202117307560
(43) Date de publication de la demande: 09.11.2022
(73) Titulaire: SAFRAN, 75015 Paris (FR); SAFRAN AIRCRAFT ENGINES, 75015 Paris (FR)
(72) Inventeur: BOSSAN, Pierre-Antoine, 77550 MOISSY-CRAMAYEL (FR); CHAUVIN, Thierry Patrick, 77550 MOISSY-CRAMAYEL (FR); CHIN, Lauren, 77550 MOISSY-CRAMAYEL (FR); LAPENTA, Cali, 77550 MOISSY-CRAMAYEL (FR); GALLOIS, Philippe, 77550 MOISSY-CRAMAYEL (FR)
(74) Mandataire: Gevers & Orès

(56) Documents cités:
- US-A1- 2010 015 455
- US-A1- 2020 149 400
- EBNESAJJAD SINA ET AL: "Fluoropolymer Additives", 1 January 2012 (2012-01-01), XP055954569, ISBN: 978-1-4377-3461-4, Retrieved from the Internet <URL:https://www.sciencedirect.com/topics/engineering/release-agent>

## Description

### Domaine technique de l'invention

La présente invention concerne un procédé de collage et un procédé d'analyse de collage entre deux pièces aéronautiques.

### Arrière-plan technique

L'état de la technique comprend notamment les documents FR-A1-2 956 057, FR-A1-3 029 134 et FR-A1-3 051 386. US 2010/015455 A1 concerne des procédés et des dispositifs destinés à valider les lignes de collage.

L'utilisation de matériaux composites est avantageuse dans l'industrie aéronautique notamment car ces matériaux ont des performances mécaniques intéressantes pour des masses relativement faibles.

Un procédé de fabrication d'une pièce composite pour l'industrie aéronautique, qui est bien connu de l'homme du métier, est le procédé de moulage RTM dont les initiales font référence à l'acronyme anglo-saxon de *Resin Transfer Molding.*

Il s'agit d'un procédé de réalisation d'une pièce en matériau composite à base de fibres imprégnées de résine. Un tel procédé est par exemple utilisé pour fabriquer une aube de soufflante de turbomachine. Une préforme est réalisée puis chauffée pour que la résine polymérise et forme la pièce finale, par exemple une pale d'aube. Cette pale comporte un intrados et un extrados qui s'étendent depuis un bord d'attaque jusqu'à un bord de fuite de la pale.

Le matériau composite de la pale est relativement fragile, et en particulier sensible aux chocs, et il est connu de le protéger au moyen d'un bouclier métallique qui est rapporté et fixé sur le bord d'attaque de la pale.

Après polymérisation de la résine de la pale, le bouclier peut être fixé sur la pale par exemple avec un adhésif époxy. La complexité de la géométrie des pièces peut entraîner des difficultés dans l'appairage des pièces et impacter la qualité de l'assemblage collé.

L'assemblage par collage peut en effet présenter de nombreuses anomalies liées par exemple à la présence de porosité ou de surépaisseurs d'adhésif. Pour vérifier la qualité de l'assemblage par collage, il existe deux méthodes différentes :
- la méthode de contrôle destructive, notamment par microscopie optique sur coupe. Cette méthode nécessite une découpe de la zone du film de colle qui va être analysée. Cette méthode présente tout d'abord l'inconvénient que l'analyse réalisée est limitée à la zone coupée mais surtout que la pièce est détruite pour réaliser cette analyse.
- la méthode de contrôle non destructive classique, notamment le contrôle ultrasonique. Cette méthode présente toutefois des limites quant à la caractérisation des films de colle. Par exemple, lorsque les pièces ont des géométries très variables ou de fortes hétérogénéités de matière, ce qui est le cas pour des aubes, il est impossible de discerner l'effet induit par les paramètres du procédé de collage par rapport à celui induit par la géométrie des pièces.

Les deux méthodes ci-dessus, coûteuses et chronophages, rendent impossible la réalisation de tests en grande quantité lors de la mise au point ou l'industrialisation d'un nouveau procédé de collage. De plus, la qualité de cette analyse de collage reste limitée. Les collages sont donc par conséquent toujours avec de nombreuses anomalies.

L'invention vise à améliorer au moins un des problèmes précités.

### Résumé de l'invention

L'invention propose à cet effet un procédé d'analyse d'un collage entre deux pièces aéronautiques, caractérisé en ce qu'il comprend les étapes consistant à :
i) appliquer un premier agent de bouchage de pores sur une première surface à coller d'une première pièce, et un second agent de bouchage de pores sur une seconde surface à coller d'une première pièce,
   a) appliquer un premier agent de démoulage sur le premier agent de bouchage de pores, et un second agent de démoulage sur le second agent de bouchage de pores,
   b) appliquer une colle sur au moins un des premier et second agents de démoulage et positionner les première et seconde pièces l'une sur l'autre de sorte que la colle est située entre le premier et le second agents de démoulage, la colle formant un film de colle après polymérisation,
   c) séparer les pièces l'une de l'autre et retirer le film de colle d'un seul tenant,
   d) analyser le film de colle afin notamment d'inspecter la qualité du film de colle sur toute la surface utile du collage.

L'invention permet ainsi de retirer le film de colle d'un seul tenant rendant possible l'analyse sur la totalité de la zone utile du collage en situation réelle. Elle permet en outre de garder les deux pièces intactes après séparation, ce qui permet de répéter le test plusieurs fois dans un temps restreint.

Les paramètres liés à la géométrie de la pièce sont alors identiques pour tous les tests effectués sur un même couple de pièces.

Les paramètres liés à la géométrie des pièces étant figés, il est donc possible de discerner uniquement l'effet des paramètres du procédé de collage lors de de la répétition d'analyses et de supprimer ainsi la cause racine des anomalies du collage. Il sera alors possible de régler au mieux les paramètres du procédé de collage de manière à l'améliorer.

Ce procédé d'analyse est notamment plus économique que les techniques destructives et plus précis que les techniques non destructives actuelles.

Le procédé de l'invention est donc non destructif, permet d'analyser le film de colle sans la création d'artefacts et est insensible aux variations géométriques des pièces étudiées.

Le procédé selon l'invention peut comprendre une ou plusieurs des caractéristiques ci-dessous, prises isolément les unes avec les autres ou en combinaison les unes avec les autres :
- l'étape d) est réalisée en analysant au moins une image obtenue par transparence du film de colle à une lumière.
- l'analyse de l'image comprend la comparaison et l'interprétation des différences de couleur ou contraste.
- l'analyse de l'image comprend l'évaluation de l'épaisseur du film de colle dans une ou plusieurs zone(s) de l'image.
- l'analyse de l'image comprend l'évaluation du taux de porosité du film de colle.
- la première pièce est métallique.
- la seconde pièce est en matériau composite et comprend par exemple des fibres de carbone noyées dans une matrice polymérique.
- la seconde pièce est une aube ou une pale et la première pièce est un bouclier de renfort d'un bord d'attaque de cette aube ou pale.

La présente invention concerne également un procédé de collage de deux pièces aéronautiques, caractérisé en ce qu'il comprend les étapes du procédé telles que décrites précédemment, suivies des étapes consistant à : e) appliquer une colle sur au moins une des première et seconde surfaces et positionner ces surfaces l'une sur l'autre, la colle formant un film de colle après polymérisation.

Le procédé de collage comprend en outre, entre les étapes d) et e), une étape de nettoyage de la première surface de la première pièce et de la seconde surface de la seconde pièce.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en perspective d'une aube composite de turbomachine d'aéronef ;
[Fig.2] la figure 2 est un schéma de principe d'un collage selon l'invention ;
[Fig.3] la figure 3 est une vue schématique en perspective d'un film de colle après l'avoir séparé de l'aube et d'un bouclier ;
[Fig.4a-4c] les figures 4a, 4b et 4c sont des vues schématiques d'un procédé d'analyse de collage par digitalisation d'une image obtenue par transparence du film de colle à une lumière ;
[Fig.5a-5b] les figures 5a et 5b sont des vues schématiques d'images digitalisées de deux films de colle ;
[Fig.6] la figure 6 est un graphique de corrélation entre des niveaux de gris présents sur l'image et l'épaisseur du film de colle ; et
[Fig.7] la figure 7 est une vue schématique d'une image d'un film de colle permettant d'identifier les porosités.

### Description détaillée de l'invention

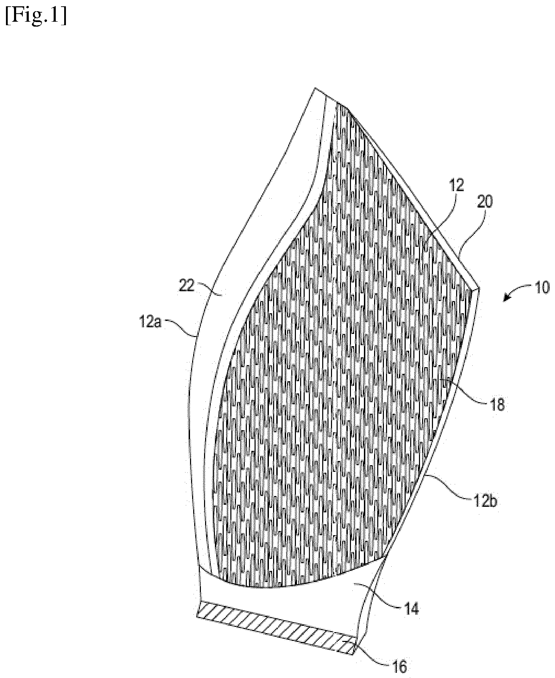

On se réfère d'abord à la figure 1 qui illustre une aube 10 en matériau composite pour une turbomachine, cette aube 10 étant par exemple une aube de soufflante.

L'aube 10 comprend une pale 12 reliée par une échasse 14 à un pied 16 qui a par exemple une forme en queue d'aronde et est conformé pour être engagé dans une alvéole de forme complémentaire d'un disque de rotor, afin de retenir l'aube sur ce disque.

La pale 12 comprend un bord d'attaque 12a et un bord de fuite 12b des gaz qui s'écoulent dans la turbomachine. La pale 12 a un profil aérodynamique incurvé voire vrillé et comprend un intrados 20 et un extrados 18 s'étendant entre les bords d'attaque 12a et de fuite 12b.

La pale 12 est réalisée à partir d'une préforme fibreuse obtenue par tissage en trois dimensions de fibres, par exemple en carbone.

Le bord d'attaque 12a de la pale est renforcé et protégé par un bouclier 22 notamment métallique, de renfort du bord d'attaque 12a et qui est fixé sur ce dernier. Le bouclier 22 est par exemple en alliage à base de titane.

Cette fixation est notamment réalisée par collage, formant un film de colle après polymérisation, entre la pale 12 et le bouclier 22.

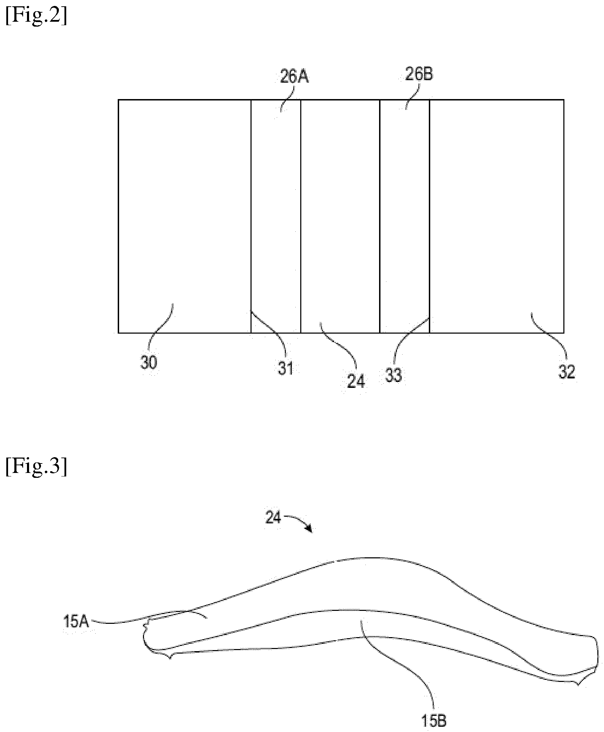

Comme visible sur la figure 2, l'invention concerne un procédé d'analyse de collage entre une première pièce 30, par exemple le bouclier métallique 22, et une deuxième pièce 32, par exemple l'aube 10 ou la pale 12, en matériau composite et comprenant notamment des fibres de carbone noyées dans une matrice polymérique. Pour permettre l'analyse de ce film de colle 24, l'invention propose d'obtenir le film de colle 24 d'un seul tenant en suivant les étapes a), b) et c) suivantes.

L'étape a) consiste à appliquer un premier agent de démoulage 26A, sur une première surface 31 à coller de la première pièce 30, et un second agent de démoulage 26B sur une seconde surface 33 à coller de la seconde pièce 32. L'étape a) est précédée d'une étape d'application d'un agent de bouchage de pores sur les première et seconde surfaces 31, 33.

L'étape b) consiste ensuite à appliquer une colle sur au moins le premier ou le second agent de démoulage 26A, 26B, et positionner les première et seconde pièces 30, 32 l'une sur l'autre de sorte que la colle est située entre le premier et le second agents de démoulage 26A, 26B, la colle formant un film ou joint de colle 24 après polymérisation. Cette étape de collage du procédé d'analyse incluant la présence des premier et second agents de démoulage 26A, 26B, est réalisée dans des conditions quasi similaires au procédé classique de collage lors de production d'une aube. Durant cette étape de collage, certains paramètres, tels que la pression, ou le débit d'écoulement de l'adhésif sont connus et peuvent être réglés.

Lors de l'étape suivante c), il est possible de séparer les première et seconde pièces 30, 32, l'une de l'autre et retirer le film de colle 24 d'un seul tenant, comme représenté dans la figure 3, grâce aux premier et second agents de démoulage 26A, 26B.

Il est alors possible de passer à l'étape suivante d) du procédé qui consiste à analyser le film de colle 24, afin notamment d'inspecter la qualité du film de colle 24 sur toute la surface utile du collage.

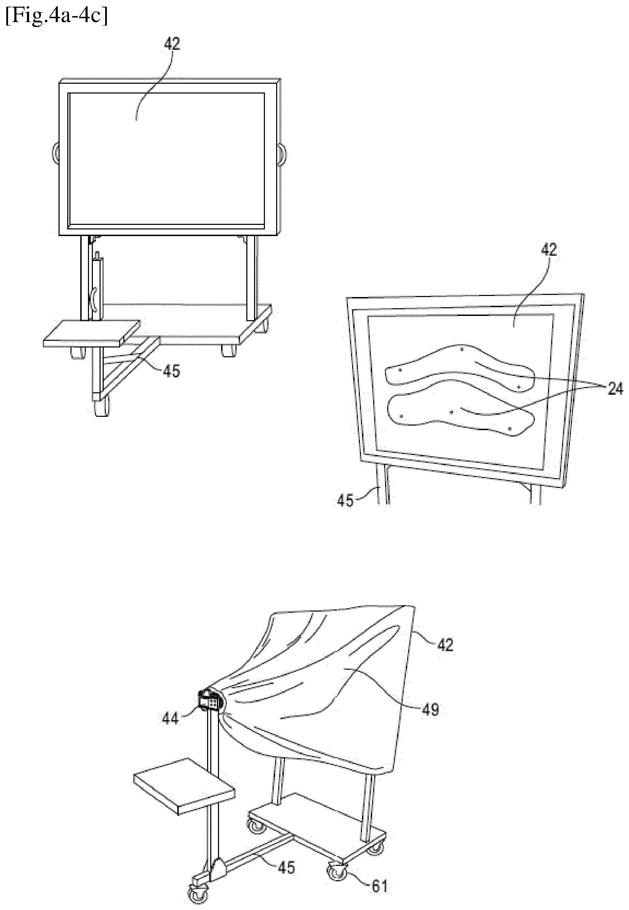

Pour l'analyse du film de colle 24 et comme illustré sur les figures 4a, 4b et 4c, l'invention prévoit le placement du film de colle 24 sur un écran de lumière 42. La lumière se transmet ainsi par transparence à travers le film de colle 24, donnant des variations de contraste, de niveau de gris et/ou de couleur qui sont liées à des variations d'épaisseurs du film de colle 24 et donc des variations de transmission de la lumière.

Le procédé prévoit alors une acquisition d'une image digitale du film de colle 24 éclairé, notamment à l'aide d'un appareil photo numérique 44, placé à un endroit précis, en particulier sur un bâti 45, notamment figé. L'écran de lumière 42 peut également se situer sur le bâti 45. Ainsi, l'assemblage formé de l'écran de lumière 42, de l'appareil photo numérique 44 et du bâti 45 forme un ensemble figé en particulier dans le but d'améliorer la qualité des images et de l'analyse. Alternativement, l'appareil photo numérique 44 est placé à un endroit précis marqué au sol par un repère fixe par rapport à l'écran de lumière 42.

Le bâti 45 peut par exemple être monté sur des roulettes 61. Le bâti 45 comprend notamment une bâche 49 recouvrant l'appareil photo numérique 44 et l'écran de lumière 42 en particulier dans le but d'améliorer la qualité des images et de l'analyse.

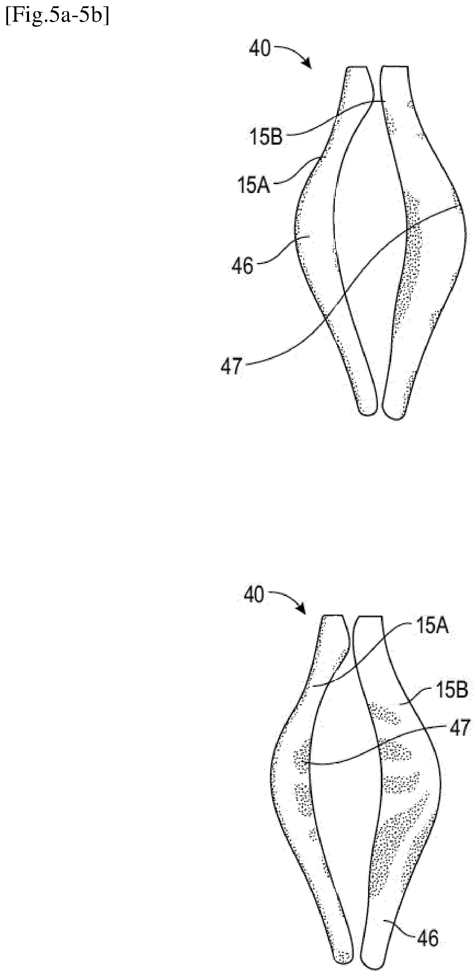

Cette digitalisation est illustrée de manière schématique sur les figures 5a et 5b, sur lesquelles les images 40 de deux films de colle 24, coté extrados 15A et intrados 15B ont été obtenus par deux méthodes différentes. La première méthode, représentée sur la figure 5a, consiste en l'assemblage d'une aube avec un bouclier. La deuxième méthode, représentée sur la figure 5b, consiste en l'assemblage de la même aube mais avec un bouclier différent.

Une analyse de l'image par ordinateur peut alors être effectuée pour notamment comparer et interpréter des différences de couleurs ou contrastes pour évaluer l'épaisseur sur l'ensemble du film de colle 24. Ainsi une application spécifique a été développée pour permettre une corrélation entre le niveau de gris relevé sur l'image 40 de film de colle et l'épaisseur du film de colle.

Cette corrélation ou charte de référence entre le niveau de gris et l'épaisseur a été trouvée de manière empirique en suivant les étapes suivantes :
- marquage de différentes zones sur le film de colle 24, notamment sept zones. Le marquage est en particulier réalisé par un cercle avec un marqueur noir et permet d'assurer un repérage précis des zones sur le film de colle 24, visible sur l'image digitale 40. Les sept zones choisies seront approximativement identiques sur tous les échantillons de films de colle 24.
- mesures physiques de l'épaisseur du film de colle 24 au niveau des sept zones marquées préalablement au marqueur. L'instrument de mesure permet des mesures avec une précision au micromètre ou tout autre moyen capable de mesurer.
- filtrage des valeurs de gris sur l'image digitale pour obtenir une teinte colorée, par exemple une teinte couleur feu, appelé *fire grayscale filtering* en terme anglo-saxon. Plus précisément, entre un pixel noir, de valeur 0, et un pixel blanc de valeur 255, les valeurs intermédiaires vont teindre les pixels en bleu, rouge, orange et jaune.
- relevé du niveau de gris, c'est-à-dire des valeurs de teinte des pixels sur l'image digitale dans les sept zones marquées préalablement au marqueur, visibles sur l'image. La taille de la zone à relever peut être par exemple de 25 à 50 pixels.
- création d'un graphique, avec les valeurs de gris et l'épaisseur mesurée physiquement pour les sept zones de manière à obtenir une courbe de corrélation entre les valeurs de gris et l'épaisseur du film de colle 24.

Cette expérience est appliquée pour les deux faces du film de colle 24, c'est à dire coté extrados 15A et coté intrados 15B et pour chaque méthode, notamment la méthode figure 5a et la méthode figure 5b.

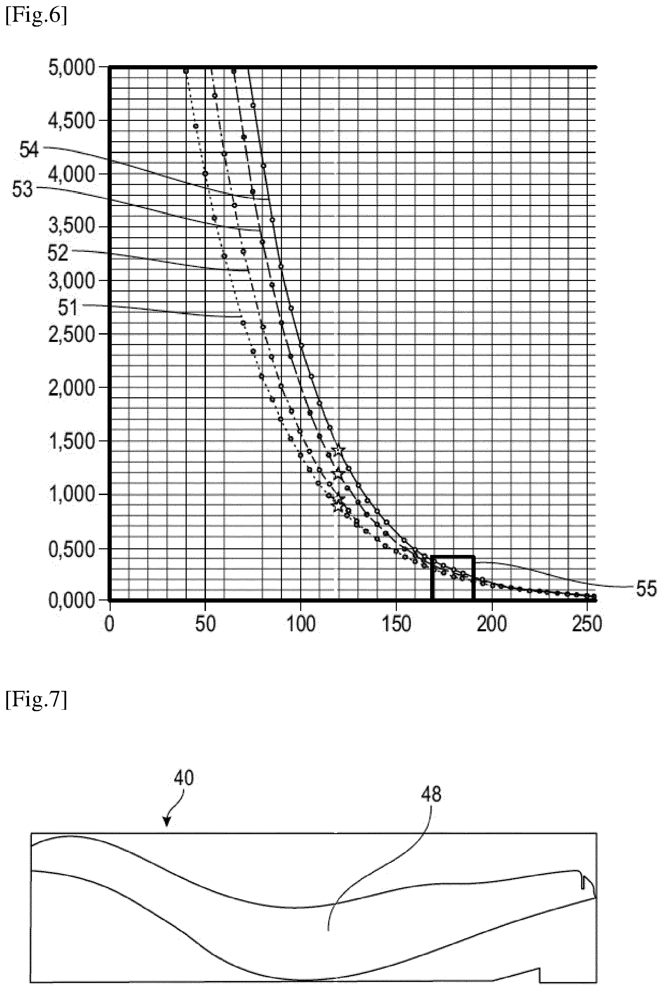

Comme illustré sur la figure 6, le graphique présente en abscisse les valeurs de gris, de 0 à 255, et en ordonnées les épaisseurs en millimètres du film de colle 24. Une courbe différente est tracée pour chaque méthode utilisée et pour chaque côté (intrados et l'extrados) du film de colle. La courbe est tracée à partir des points dont l'abscisse correspond à la valeur moyenne de gris des pixels sur une zone du film de colle 24, et donc l'ordonnée correspond à la mesure en millimètre de l'épaisseur de cette même zone du film de colle 24.

Sur le graphique, la courbe 51 représente les valeurs obtenues côté intrados avec la méthode figure 5a, la courbe 52 représente les valeurs obtenues côté extrados avec la méthode figure 5a, la courbe 53 représente les valeurs obtenues côté extrados avec la méthode figure 5b et la courbe 54 représente les valeurs obtenues côté intrados avec la méthode figure 5b.

Grâce à ces quatre courbes, il est possible d'évaluer l'épaisseur en tout point du film de colle 24 en utilisant le niveau de gris des pixels de l'image digitale 40.

L'épaisseur du film de colle 24 doit être comprise entre 30 et 400 µm et notamment inférieure à 350 microns. Il faut ainsi que le niveau de gris se situe dans la zone du graphique référencée 55, c'est-à-dire compris que le niveau de gris soit compris entre 170 et 190.

En revenant aux exemples illustrés aux figures 5a et 5b une zone ayant une couleur claire référencée 46, correspond à une épaisseur faible du film de colle 24. Une zone ayant une couleur foncée référencée 47, notamment illustrée par des pointillés, correspond à une épaisseur importante du film de colle 24. Pour une des raisons de clarté, les figures 5a et 5b ne représentent que deux zones distinctes, claire 46 et foncée 47, mais les images 40 comprennent en réalité un dégradé de niveau de gris et/ou de couleur comme expliqué précédemment.

L'analyse de l'image permet également l'évaluation du taux de porosité du film de colle 24 sur l'intrados et l'extrados, comme représenté sur la figure 7. Pour obtenir cette image, les images digitales 40 des films de colle 24 sont travaillées, notamment en suivant le procédé suivant : assemblage, passage en niveau de gris 8 bits, uniformisation du fond, filtrage par bande passante, inversion des niveaux de gris, détourage de la zone d'intérêt, seuillage en noir et blanc et binérisation. Les porosités sont ainsi représentées par des zones de pixels noirs sur fond blanc. Ces zones de porosités 48 peuvent être comptées, leur surface calculée permettant ainsi de réaliser des comparaisons entre différents films de colle 24 dont les paramètres de collage, tels que la pression appliquée sur le film ou le débit de l'adhésif, sont différents dans le but de réduire le taux de porosité. La comparaison du taux de porosité permet également d'améliorer le procédé de collage.

Le procédé d'analyse de l'invention peut être répété plusieurs fois à la suite entre les mêmes première et seconde pièces 30, 32 mais en faisant varier les paramètres de collage tels que la pression appliquée sur le film ou le débit de d'adhésif afin d'étudier l'effet des paramètres sur la qualité du collage et en particulier sur l'épaisseur et le taux de porosité du film de colle. L'interprétation et la comparaison des différentes épaisseurs et taux de porosité permettra d'optimiser les réglages des paramètres de collage afin de réaliser un procédé de collage entre deux pièces aéronautiques, tels qu'un bouclier et une aube, de qualité améliorée.

L'invention concerne en outre un tel procédé de collage comprenant les étapes précédentes du procédé d'analyse, suivies des étapes consistant à :
e) appliquer une colle sur au moins une des première et seconde surfaces 31, 33, et positionner ces surfaces l'une sur l'autre, la colle formant un film de colle 24 après polymérisation.

Ainsi, grâce à l'invention et en particulier à l'analyse préalable du film de colle, les paramètres du procédé de collage sont optimisés, de sorte que le collage est optimisé notamment au niveau de l'épaisseur du film de colle et de sa porosité.

Le procédé de collage de l'invention comprend en outre, entre les étapes d) et e), une étape de nettoyage, par exemple des résidus de démoulant, des première et seconde surfaces 31, 33, citées précédemment.

## Revendications

1. Procédé d'analyse d'un collage entre deux pièces (30, 32) aéronautiques, **caractérisé en ce qu'**il comprend les étapes consistant à :
i) appliquer un premier agent de bouchage de pores sur une première surface (31) à coller d'une première pièce (30), et un second agent de bouchage de pores sur une seconde surface (33) à coller d'une première pièce (32),
a) appliquer un premier agent de démoulage (26A) sur le premier agent de bouchage de pores, et un second agent de démoulage (26B) sur le second agent de bouchage de pores,
b) appliquer une colle sur au moins un des premier (26A) et second agents de démoulage (26B) et positionner les première (30) et seconde (32) pièces l'une sur l'autre de sorte que la colle est située entre le premier (26A) et le second (26B) agents de démoulage, la colle formant un film de colle (24) après polymérisation,
c) séparer les pièces (30, 32) l'une de l'autre et retirer le film de colle (24) d'un seul tenant,
d) analyser le film de colle (24) afin notamment d'inspecter la qualité du film de colle (24) sur toute la surface utile du collage.

2. Procédé selon l'une des revendications précédentes, dans lequel l'étape d) est réalisée en analysant au moins une image (40) obtenue par transparence du film de colle (24) à une lumière (42).

3. Procédé selon la revendication précédente, dans lequel l'analyse de l'image (40) comprend la comparaison et l'interprétation des différences de couleur ou contraste.

4. Procédé selon la revendication précédente, dans lequel l'analyse de l'image (40) comprend l'évaluation de l'épaisseur du film de colle (24) dans une ou plusieurs zone(s) de l'image.

5. Procédé selon la revendication 3 ou 4, dans lequel l'analyse de l'image (40) comprend l'évaluation du taux de porosité du film de colle (24).

6. Procédé selon l'une des revendications précédentes, dans lequel la première pièce (30) est métallique.

7. Procédé selon l'une des revendications précédentes, dans lequel la seconde pièce (32) est en matériau composite et comprend par exemple des fibres de carbone noyées dans une matrice polymérique.

8. Procédé selon l'une des revendications précédentes, dans lequel la seconde pièce (32) est une aube (10) ou une pale (12) et la première pièce (30) est un bouclier (22) de renfort d'un bord d'attaque (12a) de cette aube (10) ou pale (12).

9. Procédé de collage de deux pièces aéronautiques, **caractérisé en ce qu'**il comprend les étapes du procédé selon l'une des revendications précédentes, suivies des étapes consistant à :
e) appliquer une colle sur au moins une des première (31) et seconde (33) surfaces et positionner ces surfaces l'une sur l'autre, la colle formant un film de colle (24) après polymérisation.

10. Procédé selon la revendication précédente, dans lequel il comprend, entre les étapes d) et e), une étape de nettoyage desdites première (31) et seconde (33) surfaces.

## Patentansprüche

1. Verfahren zur Analyse einer Verklebung zwischen zwei Flugzeugteilen (30, 32), **dadurch gekennzeichnet, dass** es die folgenden Schritte umfasst:
i) Aufbringen eines ersten Porenverschlussmittels auf eine erste zu verklebende Oberfläche (31) eines ersten Teils (30) und eines zweiten Porenverschlussmittels auf eine zweite zu verklebende Oberfläche (33) eines ersten Teils (32),
a) Aufbringen eines ersten Formtrennmittels (26A) auf das erste Porenverschlussmittel und eines zweiten Formtrennmittels (26B) auf das zweite Porenverschlussmittel,
b) Aufbringen eines Klebstoffs auf mindestens eines des ersten (26A) und zweiten (26B) Formtrennmittels und Positionieren des ersten (30) und zweiten (32) Teils so übereinander, dass sich der Klebstoff zwischen dem ersten (26A) und dem zweiten (26B) Formtrennmittel befindet, wobei der Klebstoff nach der Polymerisation einen Klebstofffilm (24) bildet,
c) Trennen der Teile (30, 32) voneinander und Entfernen des Klebefilms (24) in einem Stück,
d) Analysieren des Klebefilms (24), insbesondere um die Qualität des Klebefilms (24) auf der gesamten Nutzoberfläche der Verklebung zu untersuchen.

2. Verfahren nach einem der vorstehenden Ansprüche, wobei der Schritt d) durch Analysieren mindestens eines Bildes (40) durchgeführt wird, das durch Durchleuchten des Klebefilms (24) mit einem Licht (42) erhalten wird.

3. Verfahren nach dem vorstehenden Anspruch, wobei die Analyse des Bildes (40) den Vergleich und die Auswertung von Farb- oder Kontrastunterschieden umfasst.

4. Verfahren nach dem vorstehenden Anspruch, wobei die Analyse des Bildes (40) die Bewertung der Dicke des Klebstofffilms (24) in einem oder mehreren Bereichen des Bildes umfasst.

5. Verfahren nach Anspruch 3 oder 4, wobei die Analyse des Bildes (40) die Bewertung des Porositätsgrades des Klebefilms (24) umfasst.

6. Verfahren nach einem der vorstehenden Ansprüche, wobei der erste Teil (30) metallisch ist.

7. Verfahren nach einem der vorstehenden Ansprüche, wobei der zweite Teil (32) aus einem Verbundwerkstoff besteht und zum Beispiel Kohlenstofffasern umfasst, die in eine Polymermatrix eingebettet sind.

8. Verfahren nach einem der vorstehenden Ansprüche, wobei der zweite Teil (32) eine Schaufel (10) oder ein Blatt (12) ist und der erste Teil (30) ein Schild (22) zur Verstärkung einer Angriffskante (12a) dieser Schaufel (10) oder dieses Blattes (12) ist.

9. Verfahren zum Verkleben von zwei Flugzeugteilen, **dadurch gekennzeichnet, dass** es die Schritte des Verfahrens nach einem der vorstehenden Ansprüche umfasst, gefolgt von den folgenden Schritten:
e) Aufbringen eines Klebstoffs auf mindestens eine der ersten (31) und zweiten (33) Oberflächen und Positionieren dieser Oberflächen übereinander, wobei der Klebstoff nach der Polymerisation einen Klebstofffilm (24) bildet.

10. Verfahren nach dem vorstehenden Anspruch, wobei es zwischen den Schritten d) und e) einen Schritt zum Reinigen der ersten (31) und zweiten (33) Oberfläche umfasst.

## Claims

1. A method for analysing a bonding between two aeronautical parts (30, 32), **characterised in that** it comprises the steps of:
i) applying a first pore-sealing agent to a first surface (31) to be bonded of a first part (30) and a second pore-sealing agent to a second surface (33) to be bonded of a second part (32),
a) applying a first release agent (26A) to the first pore-sealing agent, and a second release agent (26B) to the second pore-sealing agent,
b) applying an adhesive to at least one of the first (26A) and second (26B) agents and positioning the first (30) and second (32) parts on top of each other so that the adhesive is located between the first (26A) and the second (26B) release agents, the adhesive forming an adhesive film (24) after polymerisation,
c) separating the parts (30, 32) from each other and removing the adhesive film (24) in one piece,
d) analysing the adhesive film (24) to monitor the adhesive film (24) quality on the overall surface bonding.

2. The method according to any of the preceding claims, wherein the step d) is carried out by analysing at least one image (40) obtained by transparency of the adhesive film (24) to light (42).

3. The method according to the preceding claim, wherein the analysis of the image (40) comprises the comparison and the interpretation of the differences in colour or contrast.

4. The method according to the preceding claim, wherein the analysis of the image (40) comprises the evaluation of the thickness of the adhesive film (24) in one or more areas of the image.

5. The method according to claim 4 or 5, wherein the analysis of the image (40) comprises the evaluation of the porosity rate of the adhesive film (24).

6. The method according to any of the preceding claims, wherein the first part (30) is metallic.

7. The method according to any of the preceding claims, wherein the second part (32) is made of composite material and comprises, for example, carbon fibres embedded in a polymeric matrix.

8. The method according to one of the preceding claims, wherein the second part (32) is a vane (10) or a blade (12) and the first part (30) is a shield (22) for reinforcing a leading edge (12a) of this vane (10) or blade (12).

9. A method for bonding two aeronautical parts, **characterised in that** it comprises the steps of the method according to one of the preceding claims, followed by the steps of:
e) applying an adhesive to at least one of the first (31) and second (33) surfaces and positioning these surfaces on top of each other, the adhesive forming an adhesive film (24) after polymerisation.

10. The method according to any of the preceding claims, wherein it comprises, between the steps d) and e), a step of cleaning said first (31) and second (33) surfaces.
